# EUROPÄISCHE PATENTSCHRIFT

(11) **EP 1 907 675 B1**
(45) Veröffentlichungstag und Bekanntmachung des Hinweises auf die Patenterteilung: **29.10.2008**
(21) Anmeldenummer: 06754492.4
(22) Anmeldetag: 22.06.2006
(51) Int. Cl.: F01N 3/22, B01D 53/94, F01N 3/08

(54) **VERFAHREN ZUR REGENERATION VON STICKOXID-SPEICHERKATALYSATOREN**
METHOD FOR REGENERATING NITROGEN OXIDE STORAGE CATALYSTS
PROCEDE POUR REGENERER DES CATALYSEURS A ACCUMULATION D'OXYDE D'AZOTE

(30) Priorität: 16.07.2005 DE 102005033395
(43) Veröffentlichungstag der Anmeldung: 09.04.2008
(73) Patentinhaber: Umicore AG & Co. KG, 63457 Hanau-Wolfgang (DE)
(72) Erfinder: GOEBEL, Ulrich, 65795 Hattersheim (DE); BREMM, Stephan, 63796 Kahl (DE); TOMANIK, Christian, Manfred, 35447 Reiskirchen (DE); MUELLER, Wilfried, 61184 Karben (DE); KREUZER, Thomas, 61184 Karben (DE)
(74) Vertreter: Herrmann, Reinhard
(86) Internationale Anmeldenummer: PCT/EP2006/005994
(87) Internationale Veröffentlichungsnummer: WO 2007/009550

(56) Entgegenhaltungen:
- DE-A1- 10 326 592
- US-A- 5 388 403
- US-B1- 6 722 125
- PATENT ABSTRACTS OF JAPAN Bd. 018, Nr. 432 (M-1654), 11. August 1994 (1994-08-11) & JP 06 129236 A (TOYOTA MOTOR CORP), 10. Mai 1994 (1994-05-10)

## Beschreibung

Die Erfindung betrifft ein Verfahren zur Regeneration von Stickoxid-Speicherkatalysatoren, welches die bei der Regeneration üblicherweise auftretenden kurzen Emissionsspitzen von Kohlenwasserstoffen und Kohlenmonoxid beim Zurückschalten in den Speicherbetrieb verringert. Das Verfahren ist besonders vorteilhaft bei schon durch Alterung geschädigten Katalysatoren, die häufiger als frische Katalysatoren regeneriert werden müssen.

Stickoxid-Speicherkatalysatoren werden zur Entfernung der im mageren Abgas von sogenannten Magermotoren enthaltenen Stickoxide verwendet. Dabei beruht die Reinigungswirkung darauf, daß in einer mageren Betriebsphase (Speicherphase, Magerbetrieb) des Motors die Stickoxide vom Speichermaterial des Speicherkatalysators in Form von Nitraten gespeichert werden. In einer darauffolgenden fetten Betriebsphase (Regenerationsphase, Fettbetrieb) des Motors werden die zuvor gebildeten Nitrate zersetzt und die wieder freiwerdenden Stickoxide mit den reduzierend wirkenden, fetten Bestandteilen des Abgases während des Fettbetriebs am Speicherkatalysator zu Stickstoff, Kohlendioxid und Wasser umgesetzt. Als fette Bestandteile des Abgases werden Kohlenwasserstoffe, Kohlenmonoxid und Wasserstoff bezeichnet.

Die Arbeitsweise von Stickoxid-Speicherkatalysatoren wird ausführlich in der SAE-Schrift SAE 950809 beschrieben. Die Zusammensetzung von Stickoxid-Speicherkatalysatoren sind dem Fachmann hinreichend bekannt. Bei den Stickoxid-Speichermaterialien handelt es sich in der Regel um basische Verbindungen der Alkali- oder Erdalkalimetalle wie zum Beispiel Oxide, Hydroxide oder Carbonate des Bariums und Strontiums, die auf geeigneten Trägermaterialien in fein verteilter Form aufgebracht sind. Darüber hinaus weist ein Stickoxid-Speicherkatalysator noch katalytisch aktive Edelmetalle der Platingruppe und Sauerstoff-Speichermaterialien auf. Diese Zusammensetzung verleiht einem Stickoxid-Speicherkatalysator unter stöchiometrischen Betriebsbedingungen die Funktion eines Dreiweg-Katalysators.

Die Speicherphase (Magerbetrieb) dauert gewöhnlich 100 bis 200 Sekunden und hängt von der Speicherkapazität des Katalysators und der Konzentration der Stickoxide im Abgas ab. Bei gealterten Katalysatoren mit verminderter Speicherkapazität kann die Dauer der Speicherphase aber auch auf 50 Sekunden und weniger absinken. Die Regenerationsphase (Fettbetrieb) ist dagegen immer wesentlich kürzer und dauert nur wenige Sekunden. Das während der Regeneration aus dem Stickoxid-Speicherkatalysator austretende Abgas weist im wesentlichen keine Schadstoffe mehr auf und ist stöchiometrisch zusammengesetzt. Seine Luftzahl λ ist während dieser Zeit nahezu gleich 1.

Zum Ende der Regenerationsphase reichen die freigesetzten Stickoxide und der an den Sauerstoff-Speicherkomponenten des Katalysators gebundene Sauerstoff nicht mehr aus, um alle fetten Abgasbestandteile zu oxidieren. Es kommt daher zu einem Durchbruch dieser Bestandteile durch den Katalysator und die Luftzahl sinkt auf einen Wert unter 1. Dieser Durchbruch zeigt das Ende der Regeneration an und kann mit Hilfe einer sogenannten Lambda-Sonde hinter dem Speicherkatalysator registriert werden.

Die Regeneration eines Speicherkatalysators ist also zwangsläufig mit kurzen Emissionsspitzen von Kohlenwasserstoffen und Kohlenmonoxid verbunden, die noch durch folgenden Effekt verstärkt werden: Die Abgasleitung zwischen Motor und Speicherkatalysator weist üblicherweise eine endliche Länge auf. Während des Umschaltens von Fettbetrieb in den Magerbetrieb ist die gesamte Abgasleitung noch mit fettem Abgas gefüllt, das nach dem Umschalten durch das nun magere Abgas des Motors über den Katalysator in die Umwelt ausgeschoben wird. Der Katalysator kann diesen restlichen Anteil von fettem Abgas nicht mehr reinigen, da die zuvor gespeicherten, oxidierenden Bestandteile schon während des Fettbetriebs verbraucht wurden. Es kommt also zu einer verstärkten Emissionsspitze von Kohlenwasserstoffen und Kohlenmonoxid am Ende einer Regeneration.

Aufgabe der vorliegenden Erfindung ist es, ein Verfahren anzugeben, welches in der Lage ist, die Emissionsspitze zu verringern und insbesondere bei schon gealterten Speicherkatalysatoren eine insgesamt verbesserte Abgasreinigung zu ermöglichen.

Diese Aufgabe wird gelöst durch ein Verfahren zur Regeneration eines Stickoxid-Speicherkatalysators, der in der Abgasleitung eines Magermotors angeordnet ist, durch Umschalten des Motors von Magerbetrieb mit magerem Abgas auf Fettbetrieb mit fettem Abgas und nach erfolgter Regeneration erneutes Umschalten in den Magerbetrieb. Das Verfahren ist **dadurch gekennzeichnet, daß** mit dem erneuten Umschalten in den Magerbetrieb unmittelbar vor dem Speicherkatalysator so lange Luft in das Abgas eingeblasen und somit die kurzzeitig noch fette Abgaszusammensetzung in eine stöchiometrische oder magere Zusammensetzung überführt wird, bis das nun magere Abgas des Motors den Speicherkatalysator erreicht.

Das zeitweilige Einblasen von Luft in die Abgasleitung ist zum Beispiel schon aus der DE 198 02 631 C1 bekannt, die ein Abgasreinigungssystem für einen Magermotor bestehend aus einem Stickoxid-Speicherkatalysator und einem davor in die Abgasleitung eingefügten SOx-Speicherkatalysator beschreibt. In dieser Schrift wird die zusätzliche Luft benutzt, um die Temperatur eines SOx-Speicherkatalysators zwecks Entschwefelung auf die Entschwefelungstemperatur anzuheben. Der Sauerstoff der zusätzlichen Luft wird dabei mit einem Teil der reduktiven Bestandteilen des Abgases am SOx-Speicherkatalysator unter Freisetzung von Wärmeenergie umgesetzt unter Beibehaltung einer reduzierenden Abgaszusammensetzung. Das Einblasen der zusätzlichen Luft beginnt mit dem Umschalten des Motors von Magerbetrieb in den Fettbetrieb.

Gemäß der Erfindung wird dagegen die Zusammensetzung des nach dem Umschalten vom Fettbetrieb in den Magerbetrieb noch in der Abgasleitung zwischen Motor und Katalysator befindliche fette Abgas durch Einblasen von Luft in den stöchiometrischen oder überstöchiometrischen, mageren Bereich verschoben, so daß der Speicherkatalysator in der Lage ist, die im Abgas enthaltenen reduktiven Bestandteile mit Sauerstoff umzusetzen. Damit wird die beim Umschalten vom Fettbetrieb in den Magerbetrieb unvermeidlich auftretende Emissionsspitze von reduktiven Abgasbestandteilen auf das notwendige Mindestmaß verringert.

Die Dauer der Lufteinblasung hängt von der Laufzeit des Abgases zwischen Motor und Katalysator ab und ergibt sich aus der Länge der Abgasleitung und der Strömungsgeschwindigkeit des Abgases im jeweiligen Betriebspunkt des Motors. Die Menge der in das Abgas eingeblasenen Luft soll die Luftzahl des Abgases vor Eintritt in den Speicherkatalysator in den stöchiometrischen oder überstöchiometrischen, mageren Bereich verschieben. Bevorzugt wird die Stärke der Lufteinblasung so bemessen, daß das resultierende Gasgemisch eine Luftzahl λ gleich oder größer 1 aufweist und insbesondere zwischen 1 und 1,3 und besonders bevorzugt zwischen 1 und 1,05 liegt. Eine zu starke Lufteinblasung sollte vermieden werden um die Abkühlung des Abgases durch die kalte Luft so gering wie möglich zu halten.

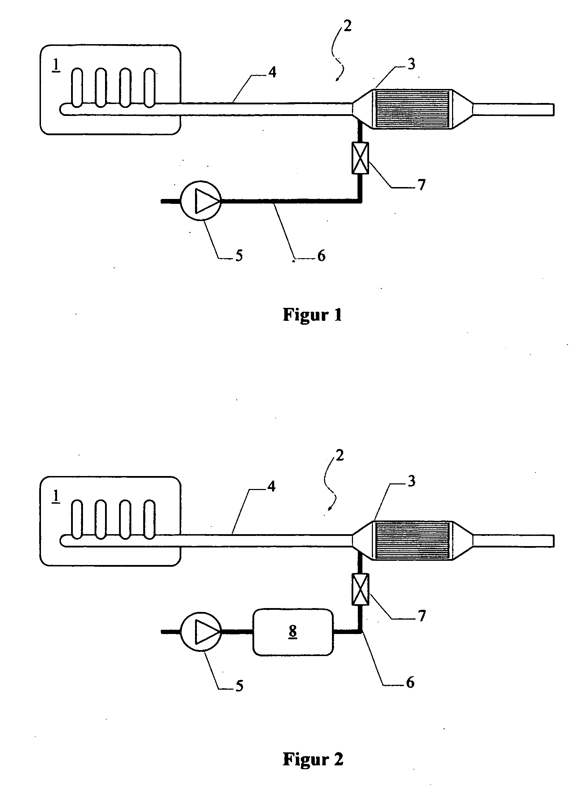

Die Erfindung wird im folgenden an Hand der Figuren 1 und 2 näher erläutert. Es zeigen:
- **Figur 1:**: Verbrennungsmotor mit Abgasreinigungsanlage und Sekundärluftzufuhr zur Durchführung des erfindungsgemäßen Verfahrens
- **Figur 2:**: Verbrennungsmotor mit Abgasreinigungsanlage und alternativer Sekundärluftzufuhr zur Durchführung des erfindungsgemäßen Verfahrens

Gemäß Figur 1 ist der Verbrennungsmotor (1) mit einer Abgasreinigungsanlage 2 ausgerüstet, die ein Konvertergehäuse (3) mit einem Stickoxid-Speicherkatalysator enthält. Das Konvertergehäuse ist über die Abgasleitung (4) und die Abgaskrümmer mit den Zylindern des Verbrennungsmotors verbunden. Zur Lufteinblasung kurz vor dem Stickoxid-Speicherkatalysator ist eine Sekundärluftpumpe (5) vorgesehen. Die Luftzuführungsleitung (6) mündet kurz vor dem Speicherkatalysator in die Abgasanlage. Die Einmündung kann dabei kurz vor dem Konvertergehäuse liegen oder direkt in das Konvertergehäuse erfolgen. Zur zeitgerechten und mengengerechten Dosierung der Lufteinblasung dient ein Dosierventil (7).

Wie schon ausgeführt, dauert die Regeneration des Speicherkatalysators nur wenige Sekunden und das Ausschieben des restlichen fetten Abgases durch das nachfolgende magere Abgas aus der Abgasleitung zwischen den Zylindern des Motors und dem Speicherkatalysator ist sogar schon nach Bruchteilen von Sekunden beendet. Um eine schnelle Bereitstellung der Luft zu gewährleisten, ist es daher zweckmäßig, die Sekundärluftpumpe kontinuierlich zu betreiben und die Dosierung der Luft zum richtigen Zeitpunkt mit dem Ventil vorzunehmen. Energiesparender ist es jedoch, die Sekundärluftpumpe immer erst mit dem Beginn der Regenerationsphase zu starten und die Dosierung der Luft ebenfalls mit dem Ventil vorzunehmen. Nach Abschalten der Lufteinblasung wird auch die Sekundärluftpumpe wieder ausgeschaltet.

In Figur 2 ist der Verbrennungsmotor mit einer alternativen Sekundärluftzuführung ausgerüstet. In dieser Anordnung ist ein Druckluftspeicher (8) vorgesehen, aus dem die Luft für die Lufteinblasung über das Ventil (6) entnommen wird. Der Druck im Druckluftspeicher wird von der Sekundärluftpumpe in einem vorgegebenen Druckintervall gehalten. Die Sekundärluftpumpe wird immer dann gestartet, wenn der Druck im Speicher unter einen unteren Grenzwert fällt und wird ausgeschaltet, wenn der Druck einen vorgesehenen oberen Grenzwert überschreitet. Auf diese Weise werden die Startvorgänge der Sekundärluftpumpe von den Regenerationsereignissen abgekoppelt und insgesamt die Anzahl der Startvorgänge gegenüber der Anordnung von Figur 1 vermindert.

## Patentansprüche

1. Verfahren zur Regeneration eines Stickoxid-Speicherkatalysators, der in der Abgasleitung eines Magermotors angeordnet ist, durch Umschalten des Motors von Magerbetrieb mit magerem Abgas auf Fettbetrieb mit fettem Abgas und nach erfolgter Regeneration erneutes Umschalten in den Magerbetrieb,
**dadurch gekennzeichnet,**
**daß** mit dem erneuten Umschalten in den Magerbetrieb unmittelbar vor dem Speicherkatalysator so lange Luft in das Abgas eingeblasen und somit die kurzzeitig noch fette Abgaszusammensetzung in eine stöchiometrische oder magere Zusammensetzung überführt wird, bis das nun magere Abgas des Motors den Speicherkatalysator erreicht.

2. Verfahren nach Anspruch 1,
**dadurch gekennzeichnet,**
**daß** die Menge der in das Abgas eingeblasenen Luft so bemessen wird, daß das resultierende Gasgemisch eine Luftzahl λ gleich oder größer 1 aufweist.

3. Verfahren nach Anspruch 2,
**dadurch gekennzeichnet,**
**daß** die Menge der in das Abgas eingeblasenen Luft so bemessen wird, daß das resultierende Gasgemisch eine Luftzahl λ zwischen 1 und 1,05 aufweist.

4. Verfahren nach Anspruch 1,
**dadurch gekennzeichnet,**
**daß** die benötigte Luft von einer Sekundärluftpumpe (5) bereitgestellt und mit Hilfe eines Ventils (7) zum richtigen Zeitpunkt und in der richtigen Menge dem Abgas zugemischt wird.

5. Verfahren nach Anspruch 4,
**dadurch gekennzeichnet,**
**daß** die Sekundärluftpumpe kontinuierlich betrieben wird.

6. Verfahren nach Anspruch 4,
**dadurch gekennzeichnet,**
**daß** die Sekundärluftpumpe erst kurz vor dem Ende des Fettbetriebs gestartet und nach Beendigung der Luftzuführung zum Abgas wieder ausgeschaltet wird.

7. Verfahren nach Anspruch 4,
**dadurch gekennzeichnet,**
**daß** die Sekundärluftpumpe mit dem Beginn des Fettbetriebs gestartet wird.

8. Verfahren nach Anspruch 4,
**dadurch gekennzeichnet,**
**daß** die Sekundärluftpumpe einen Druckluftspeicher (8) mit Luft versorgt, aus dem die Luft für die Lufteinblasung über das Ventil (7) entnommen wird.

## Claims

1. Method for regenerating a nitrogen oxide storage catalytic converter, which is arranged in the exhaust line of a lean-burn engine, by switching the engine from lean-burn mode with lean exhaust gas to rich-burn mode with rich exhaust gas, and switching back to the lean-burn mode after regeneration has taken place,
**characterized**
**in that**, with the switch back to the lean-burn mode, air is injected into the exhaust gas directly upstream of the storage catalytic converter, and therefore the briefly still-rich exhaust gas composition is changed to a stoichiometric or lean composition, until the now-lean exhaust gas of the engine reaches the storage catalytic converter.

2. Method according to Claim 1,
**characterized**
**in that** the quantity of the air injected into the exhaust gas is dimensioned such that the resulting gas mixture has an air ratio λ of equal to or greater than 1.

3. Method according to Claim 2,
**characterized**
**in that** the quantity of the air injected into the exhaust gas is dimensioned such that the resulting gas mixture has an air ratio λ of between 1 and 1.05.

4. Method according to Claim 1,
**characterized**
**in that** the required air is provided by a secondary air pump (5) and is admixed to the exhaust gas at the correct time and in the correct quantity by means of a valve (7).

5. Method according to Claim 4,
**characterized**
**in that** the secondary air pump is operated continuously.

6. Method according to Claim 4,
**characterized**
**in that** the secondary air pump is only started shortly before the end of the rich-burn mode and is shut off again after the end of the supply of air to the exhaust gas.

7. Method according to Claim 4,
**characterized**
**in that** the secondary air pump is started at the beginning of the rich-burn mode.

8. Method according to Claim 4,
**characterized**
**in that** the secondary air pump supplies air to a compressed air store (8), from which the air is extracted for the air injection via the valve (7).

## Revendications

1. Procédé de régénération d'un catalyseur à accumulation d'oxyde d'azote, qui est disposé dans le tuyau des gaz d'échappement d'un moteur à régime pauvre, par commutation du moteur du régime pauvre avec gaz d'échappement pauvres au régime riche avec gaz d'échappement riches et retour au régime pauvre après l'exécution de la régénération, **caractérisé en ce qu'**avec le retour au régime pauvre, de l'air est insufflé dans les gaz d'échappement immédiatement avant le catalyseur à accumulation, et de ce fait la composition encore temporairement riche des gaz d'échappement est ramenée à une composition stoechiométrique ou pauvre, jusqu'à ce que les gaz d'échappement à présent pauvres du moteur atteignent le catalyseur à accumulation.

2. Procédé selon la revendication 1, **caractérisé en ce que** la quantité d'air insufflée dans les gaz d'échappement est dosée de telle manière que le mélange gazeux résultant présente un excès d'air λ égal ou supérieur à 1.

3. Procédé selon la revendication 2, **caractérisé en ce que** la quantité d'air insufflée dans les gaz d'échappement est dosée de telle manière que le mélange gazeux résultant présente un excès d'air λ compris entre 1 et 1,05.

4. Procédé selon la revendication 1, **caractérisé en ce que** l'air nécessaire est fourni par une pompe à air secondaire (5) et est mélangé avec les gaz d'échappement à l'instant correct et en quantité correcte au moyen d'une soupape (7).

5. Procédé selon la revendication 4, **caractérisé en ce que** la pompe à air secondaire fonctionne en continu.

6. Procédé selon la revendication 4, **caractérisé en ce que** la pompe à air secondaire n'est mise en marche que peu de temps avant la fin du régime riche et est de nouveau arrêtée après la fin de l'ajout d'air aux gaz d'échappement.

7. Procédé selon la revendication 4, **caractérisé en ce que** la pompe à air secondaire est mise en marche lors du commencement du régime riche.

8. Procédé selon la revendication 4, **caractérisé en ce que** la pompe à air secondaire alimente en air un réservoir d'air sous pression (8.), dans lequel on prélève l'air pour l'insufflation d'air au moyen de la soupape (7).
